# EUROPEAN PATENT SPECIFICATION

(11) **EP 4 177 662 B1**
(45) Date of publication and mention of the grant of the patent: **08.04.2026**
(21) Application number: 21207163.3
(22) Date of filing: 09.11.2021
(51) Int. Cl.: G02B 21/36, G02B 21/26, G02B 21/24

(54) **INSTRUMENT FOR AUTOMATICALLY DISSECTING A BIOLOGICAL SPECIMEN ON A SLIDE**
INSTRUMENT ZUM AUTOMATISCHEN PRÄPARIEREN EINER BIOLOGISCHEN PROBE AUF EINEM OBJEKTTRÄGER
INSTRUMENT DE DISSECTION AUTOMATIQUE D'UN ÉCHANTILLON BIOLOGIQUE SUR UNE LAME

(43) Date of publication of application: 10.05.2023
(73) Proprietor: Roche Diagnostics GmbH, 68305 Mannheim (DE); F. Hoffmann-La Roche AG, 4070 Basel (CH)
(72) Inventor: Wietzorrek, Joachim, 6343 Rotkreuz (DE)
(74) Representative: Altmann Stößel Dick Patentanwälte PartG mbB

(56) References cited:
- EP-A1- 3 401 721
- EP-A2- 3 528 276
- WO-A1-2016/120433
- US-A1- 2011 221 881
- US-A1- 2015 378 143
- US-A1- 2018 128 714
- US-B1- 10 048 477

## Description

### Technical Field

The present disclosure relates to an instrument for automatically dissecting a biological specimen on a slide, a method for automatically dissecting a biological specimen on a slide, a computer program and computer-readable storage medium. Herein, the devices and methods can be used in the field of tissue diagnostics such as for digital pathology, in particular for dissection of formalin-fixed paraffin-embedded (FFPE) tissue areas of interest. However, further uses are feasible.

### Background art

Biological specimens such as tissue sections, blood, cell cultures, and like biological samples, are mounted on a slide, stained with one or more combinations of stain and biomarkers, and the resulting assay is imaged for further analysis of the content of the specimens using a digital pathology system. Moreover, either stained or unstained paraffin embedded tissue sections may be dissected for further molecular or genomic analysis. For example, in "A mill based instrument and software system for dissecting slide-mounted tissue that provides digital guidance and documentation", https://bmcclinpathol.biomedcentral.com/articles/10.1186/1472-6890-13-29, BMC Clinical Pathology volume 13, Article number:29 (2013) meso-dissection of specific Areas Of Interest (AOIs) of slide mounted tumor samples is described.

Automated tissue dissection systems, such as the AVENIO^{®} Millisect System, are known to enable precise and consistent recovery of formalin-fixed paraffin-embedded (FFPE) tissue areas of interest for molecular pathology. The system can be decomposed into a milling machine for mechanical dissection and an imaging system for controlling the milling machine. Different sizes of field of view and different levels of optical resolution are required for navigation through a microscope slide holding the tissue. It is known to use a zoom lens system having a variable focal length. However, zoom lenses are costly and show low optical performance. Three actuators are essential for control of focus, zoom and iris in order to support both, a large field of view and a high pixel density in the specimen plane. However, these two features are not supported in one go. Multiple acquisitions of frames are necessary. US 10,595,770 B2 describes an imaging platform based on nonlinear optical microscopy for rapid scanning large areas of tissue. US 2006/0291042 A1 describes an optical scanning zoom microscope with high magnification and a large field of view. US 10,139,613 B2 describes a digital microscope and method of sensing an image of a tissue sample. US10,876,933 B2 describes an automated tissue dissection instrument and methods of using the same. US 2006/0139621 A1 describes an automated microdissection instrument. US 2012/0045790 A1 describes a microdissection method and information processing system. EP 3401721 A1 discloses a method and apparatus for whole slide imaging and focusing of a specimen using an optical microscope comprising an XYZ translation stage and image stitching.

### Problem to be solved

It is therefore an objective of the present invention to provide an instrument for automatically dissecting a biological specimen on a slide, a method for automatically dissecting a biological specimen on a slide, a computer program and computer-readable storage medium, which at least partially avoid the shortcomings of known devices and methods of this kind and which at least partially address the above-mentioned challenges. Specifically, excellent optical performance of an imaging system of the instrument along with a very low price shall be reached.

### Summary

This problem is addressed by an instrument for automatically dissecting a biological specimen on a slide, a method for automatically dissecting a biological specimen on a slide, a computer program and computer-readable storage medium with the features of the independent claims 1, 10, 12 and 13 respectively. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect, an instrument for automatically dissecting a biological specimen on a slide is proposed.

The term "biological specimen" as used herein is a broad term and is to be given its ordinary and customary meaning to a person of ordinary skill in the art and is not to be limited to a special or customized meaning. The term specifically may refer, without limitation, to an arbitrary type of biological sample that can be mounted on a slide. The biological specimen may be any type of biological material, and can be derived from a variety of biological organisms, including animals, humans, plants, fungus, and the like. The biological specimen itself may be any material derived from a biological organism, including tissue, tissue sections, organs, organ sections, cells, cultured cells, cultured tissue, plant matter, secretions, excretions, and the like, including combinations thereof. The biological specimen may be embedded in a matrix such as plastic, paraffin, a gel, or any other material or agent. The biological specimen may be in a solid, or semisolidform. For example, the biological specimen may be a fresh or frozen biological sample or sample sections.

The term "slide" as used herein is a broad term and is to be given its ordinary and customary meaning to a person of ordinary skill in the art and is not to be limited to a special or customized meaning. The term may, specifically, refer, without limitation, to a substrate which is designated for a biological specimen, e.g. a sample, to be mounted on a surface of the slide. In particular for a purpose of carrying the biological specimen without any changes during the processing to the slide, the substrate is mechanically stable and can, therefore comprise any material which provides sufficient mechanical stability. In particular for a purpose of carrying a biological specimen, the substrate may preferably exhibit a surface which is configured to be compatible with biological material. By way of example, the slide is a glass slide since glass is known, on one hand, to provide sufficient mechanical stability and, on the other hand, to have a high compatibility with biological material. However, further kinds of materials for the slides may also be feasible. For a purpose of generating the desired image of the specimen, the slide may, preferably, be a plate having a 2D extension and a thickness, wherein the 2D extension of the plate may, preferably, exhibit a rectangular or circular form, and wherein the thickness of the plate may be small compared to a size of the extension, preferably 20 %, more preferred 10 %, in particular 5 %, or less than a measure for a linear extent of the 2D extension of the plate. Further, the slide may, in particular, have a form which may enable imaging of the biological specimen mounted on the slide. The slide may be a milling slide, i.e. the slide intended to be dissected by the instrument. For example, the slide may be a biological specimen slide or tissue slide. For example, the slide may be an unstained biological specimen or tissue slide. For example, the slide may be a formalin-fixed, paraffin-embedded (FFPE) slide.

The term "dissecting" as used herein is a broad term and is to be given its ordinary and customary meaning to a person of ordinary skill in the art and is not to be limited to a special or customized meaning. The term may, specifically, refer, without limitation, to a process of extracting at least one specific area of interest of the biological specimen mounted on the slide. The extracting may comprise one or more of cutting, disrupting, milling and the like. Several techniques for dissecting are known by the skilled person. For example, the dissecting may comprise ablating such as by scraping the biological specimen, e.g. by using at least one cutting device such as a scalpel, also denoted as macrodissection, and/or by using laser-based instruments, also denoted as Laser Capture Microdissection (LCM). For example, the dissecting may comprise mesodissection. The mesodissection may be performed as described in US 2014/0329269, WO2016120433 A1, or US 10,876,933 B2. The instrument may comprise at least one milling machine. The milling machine may comprise at least one extractor, such as a cutting tip, configured for extracting configured for extracting the at least one specific area of interest of the biological specimen mounted of the slide. The milling machine may comprise further elements such as at least one liquid dispensing port configured for dispensing liquid to the slide and/or at least one liquid aspiration port configured for aspirating liquid to the slide at a sample facing side of the extraction device. The milling machine may be designed as in the AVENIO^{®} Millisect system.

The term "automatically" as used herein is a broad term and is to be given its ordinary and customary meaning to a person of ordinary skill in the art and is not to be limited to a special or customized meaning. The term may, specifically, refer, without limitation, to a process which is performed completely by means of at least one computer and/or computer network and/or machine, in particular without manual action and/or interaction with a user. The instrument may further comprise at least one xy-stage configured for relative positioning of the slide and the extractor. The xy-stage may be a motorized xy-stage. The xy-stage may be coupled to the slide and may move the slide in an xy-plane. Movement of the xy-stage and/or of the extractor may be controlled by at least one control unit. For example, for automatically dissecting of the biological specimen, the instrument may comprise the control unit configured for controlling the xy-stage and the extractor. The instrument further may comprise a processing unit functionally coupled to the control unit. The processing unit may be configured for identifying the specific area of interest of the biological specimen to be extracted, wherein the control unit may be configured for moving the xy-stage and/or the extractor to extract the biological specimen based on the findings of the processing unit. The term "automatically" may comprise completely automatic dissecting, e.g. comprising automatically loading of the slide, automatic identifying of the area of interest and automatic extraction. However, manual steps may be possible such as for loading the slide, correction of position and the like.

The instrument comprises at least one imaging system. The imaging system comprises at least one camera configured for sequentially imaging at least one image of the slide at a plurality of slide positions. The imaging system comprises a relay lens system having a fixed focal length. The relay lens system is configured for relaying an impinging light beam from the slide to the camera. The instrument comprises the movable xy-stage configured for setting the slide position. The instrument comprises the at least one processing unit configured for generating a full slide image by stitching the sequentially imaged images of the slide.

The term "system" as used herein is a broad term and is to be given its ordinary and customary meaning to a person of ordinary skill in the art and is not to be limited to a special or customized meaning. The term specifically may refer, without limitation, to an arbitrary set of interacting or interdependent components parts forming a whole. Specifically, the components may interact with each other in order to fulfill at least one common function. The at least two components may be handled independently or may be coupled or connect-able.

The term "imaging system" as used herein is a broad term and is to be given its ordinary and customary meaning to a person of ordinary skill in the art and is not to be limited to a special or customized meaning. The term specifically may refer, without limitation, to a system configured for performing at least one imaging function. The term "imaging" as used herein are broad terms and are to be given their ordinary and customary meaning to a person of ordinary skill in the art and are not to be limited to a special or customized meaning. The terms may, specifically, refer, without limitation, to generating and/or providing a 2D two-dimensional representation of at least one property of the biological specimen, also denoted by the term "image". The image can typically, be processed and displayed on a screen for being regarded by eyes of a viewer, preferably, without any further aids, apart from eyeglasses of the viewer. The imaging may comprise generating and/or providing a digital image. The term "digital image" as used herein is a broad term and is to be given its ordinary and customary meaning to a person of ordinary skill in the art and is not to be limited to a special or customized meaning. The term specifically may refer, without limitation, to a discrete and discontinuous representation of the image. Thus, the term "digital image" may refer to a two-dimensional function, f(x,y), wherein intensity and/or color values are given for any x, y-position in the digital image, wherein the position may be discretized corresponding to recording pixels of the digital image.

The term "camera" as used herein is a broad term and is to be given its ordinary and customary meaning to a person of ordinary skill in the art and is not to be limited to a special or customized meaning. The term specifically may refer, without limitation, to at least one imaging device having at least one imaging element configured for recording or capturing spatially resolved one-dimensional, two-dimensional or even three-dimensional optical data or information. The camera may be a pixelated camera. For example, the camera may be a charge-coupled device (CCD) and/or a complimentary metal-oxide semiconductor (CMOS) image sensor. The camera may comprise at least one camera chip, such as at least one CCD chip and/or at least one CMOS chip. However, further kinds of imaging devices may also be feasible.

The term "sequentially imaging" as used herein are broad terms and are to be given their ordinary and customary meaning to a person of ordinary skill in the art and are not to be limited to a special or customized meaning. The terms may, specifically, refer, without limitation, to imaging the slide at a plurality of different x,y-position positions. The x,y-position may be set using the xy-stage, e.g. a motorized xy-stage, configured for relative movement of the slide and the camera. The sequentially imaging may comprise scanning the slide.

The term "relay lens system" as used herein are broad terms and are to be given their ordinary and customary meaning to a person of ordinary skill in the art and are not to be limited to a special or customized meaning. The terms may, specifically, refer, without limitation, to a system configured for relaying an impinging light beam from the slide to the camera. The relay lens system may be configured for extending a length of the optical system of the instrument. The relay lens system may be configured for inverting the image.

The relay lens system has a fixed focal length. As used herein, the term "focus", is a broad term and is to be given its ordinary and customary meaning to a person of ordinary skill in the art and is not to be limited to a special or customized meaning. The term specifically may refer, without limitation, to a distance over which incident collimated rays which may impinge on the relay lens system are brought into a point on an optical axis of the relay lens system. The term "focus" and "focal length" are used as synonyms herein. Thus, the focus constitutes a measure of an ability of the relay lens system to converge an impinging light beam. The relay lens system may comprises a plurality of lenses. The focus may refer to the effective focal length of the relay lens system. As used herein, the term "fixed focal length", is a broad term and is to be given its ordinary and customary meaning to a person of ordinary skill in the art and is not to be limited to a special or customized meaning. The term specifically may refer, without limitation, to the fact that the focal length of the relay lens system is fixed, in particular non-adjustable. The focal length of the relay lens system may be defined by the selection and fixed position of the respective lenses comprised by the relay lens system. Thus, in comparison to known instruments for dissecting using a zoom lens, the present invention proposes replacing the zoom lens with a lens system having a fixed focal length. In comparison to zoom lenses such fixed focal length lenses have a very low price.

As outlined above, the relay lens system may comprise a plurality of lenses. The lenses may be arranged symmetrically or quasi-symmetrically with respect at least one plane of symmetry perpendicular to an optical axis. The relay lens system may constitute the optical axis. The plane perpendicular to the optical axis may be the x,y-plane. The relay lens system may constitute a coordinate system, wherein "z" is a coordinate along the optical axis, also denoted as z-axis or z-direction. A coordinate along the z-axis may be considered a longitudinal coordinate z. The directions transversal to the z-axis may be considered as x- and y-directions. The x- and y-directions span the x,y-plane. As used herein, the term "symmetrically", is a broad term and is to be given its ordinary and customary meaning to a person of ordinary skill in the art and is not to be limited to a special or customized meaning. The term specifically may refer, without limitation, to a completely and/or strictly symmetric arrangement of the lenses with respect to the plane of symmetry perpendicular to the optical axis. The symmetric arrangement may refer to the number of lenses arranged with respect to the plane of symmetry and/or lens types and/or properties with respect to the plane of symmetry. The relay lens system may comprise a plurality of lenses, wherein one half of the plurality of lenses is arranged on one side with respect to the plane of symmetry and the other half of the plurality of lenses is arranged on another side with respect to the plane of symmetry. For example, the relay lens system may comprise 10 lenses, wherein 5 lenses are arranged on the one side with respect to the plane of symmetry and the other 5 are arranged on the other side with respect to the plane of symmetry. The relay lens system may comprise a plurality of lenses, wherein the type and/or properties of the lenses on the one side with respect to the plane of symmetry is mirrored on the other side with respect to the plane of symmetry. The plane of symmetry may be regarded as mirror axis in a 2D section. An aperture stop is located in the plane of symmetry. As used herein, the term "quasi-symmetrically", is a broad term and is to be given its ordinary and customary meaning to a person of ordinary skill in the art and is not to be limited to a special or customized meaning. The term specifically may refer, without limitation, to at least one deviation from a completely and/or strictly symmetric arrangement, e.g. in view of the number or types and/or properties of lenses used with respect to the plane of symmetry. For example, the relay system may comprise at least one additional element on one side with respect to the plane of symmetry. Thus, the relay lens system can be implemented with a strictly symmetric or quasi-symmetric designs allowing excellent optical performance along with a very low price.

For example, the relay lens system comprises ten lenses, wherein in direction of propagation of the light beam from the slide to the camera the relay lens comprises a bi-concave lens, a meniscus lens, a bi-convex lens followed by a cemented doublet lens comprising two elements, followed by a mirrored symmetric arrangement of said lenses.

As outlined above, the lenses may be arranged symmetrically with respect at least one plane of symmetry perpendicular to the optical axis. A strictly symmetric optical system is inherently free of the aberrations coma, lateral color and distortion. Therefore, beyond the constraint of symmetry or quasi-symmetry, the lenses may be designed in order to minimize remaining relevant aberrations like astigmatism, field curvature, spherical aberration and axial color. The lenses may be arranged with a strict symmetry. Strict symmetry implies that (i) the aperture stop of the lens is located directly at the symmetry plane, (ii) each lens in front of the aperture stop has a mirror symmetric counterpart behind the aperture stop and (iii) finally that the object has the same distance to the lens like the detector. This special case inevitably leads to a 1:1 image scale.

The imaging system may have an image scale of about 1:1. The relay lens system may have a unit magnification. As used herein, the term "image scale", is a broad term and is to be given its ordinary and customary meaning to a person of ordinary skill in the art and is not to be limited to a special or customized meaning. The term specifically may refer, without limitation, to magnification, in particular a ratio between image and object size. A pixel size of the pixels of the camera may be selected to allow an image scale of 1:1. Even though the symmetry principle is a powerful concept in optics design, a strict implementation is not required in any case. Also quasi-symmetric optical designs and image scales beyond 1:1 in the range from 0.8:1 to 1.2:1 may manifest a preferred solution in terms of low cost and high optical performance.

For example, the relay lens system may comprise a Numerical Aperture of NA= 0.05 to 0.5. For example, the relay lens system may comprise a Numerical Aperture of NA=0.18.

For example, the relay lens system may comprises a resolution, in particular an Airy radius, of < 20 µm over the full field of view.

The instrument comprises the movable xy-stage configured for setting the slide position. As used herein, the term "xy-stage", is a broad term and is to be given its ordinary and customary meaning to a person of ordinary skill in the art and is not to be limited to a special or customized meaning. The term specifically may refer, without limitation, to a device configured for relative positioning of slide and camera. The x,y-stage may be connectable with the slide, e.g. by use of a holder, for relative positioning of the slide and camera. The x,y-stage may be a motorized stage. The x,y-stage may be configured for controlling axial movement of the slide transversal to the optical axis, in particular in the x,y-plane.

The term "slide position" as used herein is a broad term and is to be given its ordinary and customary meaning to a person of ordinary skill in the art and is not to be limited to a special or customized meaning. The term specifically may refer, without limitation, to a lateral position of slide relative to the optical axis such as a x,y-position. The slide position may be set by the xy-stage. For example, a first slide position may be at (X1,Y1) and a next slide position may be (X2, Y2). The first slide position and the next slide position may be neighboring lateral x,y-positions. The tem "lateral" may refer to a direction transversal to the optical axis, i.e. in the x,y-plane. The field of view of a 1:1 relay lens system may be definitely smaller than a full slide. For example, the field of view may be Ø 11mm. Optical acquisition of a full slide may be achieved by stitching individual imaging frames, which are recorded sequentially. The term "imaging frame" as used herein is a broad term and is to be given its ordinary and customary meaning to a person of ordinary skill in the art and is not to be limited to a special or customized meaning. The term specifically may refer, without limitation, to at least one image captured at a respective x,y-position. The imaging frame may comprise a plurality of consecutive images captured at a respective x,y-position.

The instrument comprises the at least one processing unit configured for generating a full slide image by stitching the sequentially imaged images of the slide.

The term "processing unit" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processing unit may be configured for processing basic instructions that drive the computer or system. As an example, the processing unit may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. In particular, the processing unit may be a multicore processor. Specifically, the processing unit may be or may comprise a central processing unit (CPU). Additionally or alternatively, the processing unit may be or may comprise a microprocessor, thus specifically the processing unit's elements may be contained in one single integrated circuitry (IC) chip. Additionally or alternatively, the processing unit may be or may comprise one or more application specific-integrated circuits (ASICs) and/or one or more field-programmable gate arrays (FPGAs) or the like. The processing unit may provide one or more hardware elements for performing one or more of the named operations and/or may provide one or more processors with software running thereon for performing one or more of the named operations. The processing unit may comprise one or more programmable devices such as one or more computers, application-specific integrated circuits (ASICs), Digital Signal Processors (DSPs), or Field Programmable Gate Arrays (FPGAs) which are configured to perform the named operations. Additionally or alternatively, however, the processing unit may also fully or partially be embodied by hardware.

The term "full slide image" as used herein is a broad term and is to be given its ordinary and customary meaning to a person of ordinary skill in the art and is not to be limited to a special or customized meaning. The term specifically may refer, without limitation, to an image covering the whole slide. The full slide image may be a digital image of a virtual slide covering all x,y-positions for which an imaging frame was captured. As used herein, the term "stitching" is a broad term and is to be given its ordinary and customary meaning to a person of ordinary skill in the art and is not to be limited to a special or customized meaning. The term specifically may refer, without limitation, to a process comprising one or more of combining, joining, merging the sequentially imaged images into a composite image. The stitching may comprise at least one cutting step, wherein overlapping regions are cut. As used herein, the term "composite image" generally refers to an image of the entire area of the slide which is composed of sequentially imaged images. The full slide image may be generated such that all x,y-positions are comprised once within the composite image. In particular, none of the x,y-positions is comprised twice. The generating of the full slide image may comprise stitching of fields of view. The stitching may comprise combining the sequentially imaged images with respect to their x,y-position. Methods and techniques for stitching images are known by the skilled person.

For example, assuming an image scale of 1, 4x6 = 24 images are sufficient for a 2/3' camera.

Pixel sizes in object and image space are the same. In this case a Sony Pregius^{®} CMOS sensor with a standard pixel size of 3.45µm of can be used which fulfills the 4 µm sampling requirement. For example, 24 imaging frames can be integrated into a virtual slide comprising about 117 Mega Pixel.

The instrument comprises the milling machine for mechanical dissection, as outlined above. The instrument may comprise the at least one control unit configured for controlling the milling machine based on the full slide image. As further used herein, the term "control unit" generally refers to an arbitrary device configured for performing the named operations, preferably by using at least one processing unit and, more preferably, by using at least one processor and/or at least one application-specific integrated circuit. Thus, as an example, the at least one control unit may comprise the at least one processing unit. The control unit may in particular be programmatically arranged, for example to control and/or execute imaging the slide. The control unit may in particular be programmatically arranged, for example for controlling and/or executing dissecting the biological specimen. The area of interest to be dissected may be selected using the full slide image. The selection may comprise automatic selection by using at least one image processing tool and/or manual selection by a user. The control unit may be a single-part or multi-part device, which is arranged to control and/or regulate, in whole or in part, an operation of the instrument.

The instrument may comprise at least one illuminator configured for illuminating the slide. The term "illuminator " as used herein is a broad term and is to be given its ordinary and customary meaning to a person of ordinary skill in the art and is not to be limited to a special or customized meaning. The term specifically may refer, without limitation, to an arbitrary device configured for emitting light, such as one or more of light in the visible spectral range, the light in the infrared spectral range or light in the ultraviolet spectral range. The illuminator may comprise at least one light source. For example, the illuminator comprises at least one light emitting diode (LED) light source. The illuminator may be configured for emitting light having a single wavelength, e.g. of 486 nm, 588 nm or 656 nm, or may be configured for simultaneously emitting light having different wavelength, e.g. of 486 nm, 588 nm and 656 nm. Other options, however, are also feasible.

As used herein, the term "ray" generally refers to a line that is perpendicular to wavefronts of light which points in a direction of energy flow. As used herein, the term "beam" generally refers to a collection of rays. In the following, the terms "ray" and "beam" will be used as synonyms. As further used herein, the term "light beam" generally refers to an amount of light, specifically an amount of light traveling essentially in the same direction, including the possibility of the light beam having a spreading angle or widening angle.

The instrument may further comprise at least one transfer element configured for guiding a light beam from the illuminator to the slide and for transmitting light from the relay lens system to the camera. The transfer element may be or may comprise at least one beam splitter.

In a further aspect, a method for automatically dissecting a biological specimen on a slide using an instrument for automatically dissecting a biological specimen on a slide according to the present invention is proposed. With respect to definitions and embodiments for the method reference is made to the description of the instrument.

The method comprises the following method steps which, specifically, may be performed in the given order. Still, a different order is also possible. It is further possible to perform two or more of the method steps fully or partially simultaneously. Further, one or more or even all of the method steps may be performed once or may be performed repeatedly, such as repeated once or several times. Further, the method may comprise additional method steps which are not listed.

The method comprises the following steps:
a) setting a plurality of slide positions using the movable xy-stage;
b) at each slide position, relaying an impinging light beam from the slide to the camera by using the relay lens system having a fixed focal length and sequentially imaging at least one image of the slide at a plurality of slide position by using the at least one camera of the at least one imaging system;
c) stitching the sequentially imaged images of the slide thereby generating a full slide image by using the processing unit.

The instrument comprises the milling machine configured for mechanical dissection, wherein the method may comprise controlling the milling machine based on the full slide image by using a control device of the instrument.

The method may be computer-implemented. The term "computer-implemented" as used herein is a broad term and is to be given its ordinary and customary meaning to a person of ordinary skill in the art and is not to be limited to a special or customized meaning. The term specifically may refer, without limitation, to a process which is fully or partially implemented by using a data processing means, such as data processing means comprising at least one processing unit, in particular of the focus electronics and control system. The term "computer", thus, may generally refer to a device or to a combination or network of devices having at least one data processing means such as at least one processing unit. The computer, additionally, may comprise one or more further components, such as at least one of a data storage device, an electronic interface or a human-machine interface.

Further disclosed and proposed herein is a computer program including computer-executable instructions for performing the method according to the present invention in one or more of the embodiments enclosed herein when the program is executed on a computer or computer network, in particular on the processing unit of the instrument. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps a) to c) as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a schematic illustration of an instrument for automatically dissecting a biological specimen on a slide according to an embodiment of the present invention;
- Figure 2: shows a schematic illustration of the relay lens system;
- Figure 3: shows top view of an exemplary slide;
- Figures 4A to 4B: show spot diagrams;
- Figure 5: shows a contrast transfer function;
- Figure 6: shows a root mean square error
- Figure 7A: shows a field curvature;
- Figure 7B: shows a field distortion; and
- Figure 8: shows a vignetting and spatial uniformity.

### Detailed description of the embodiments

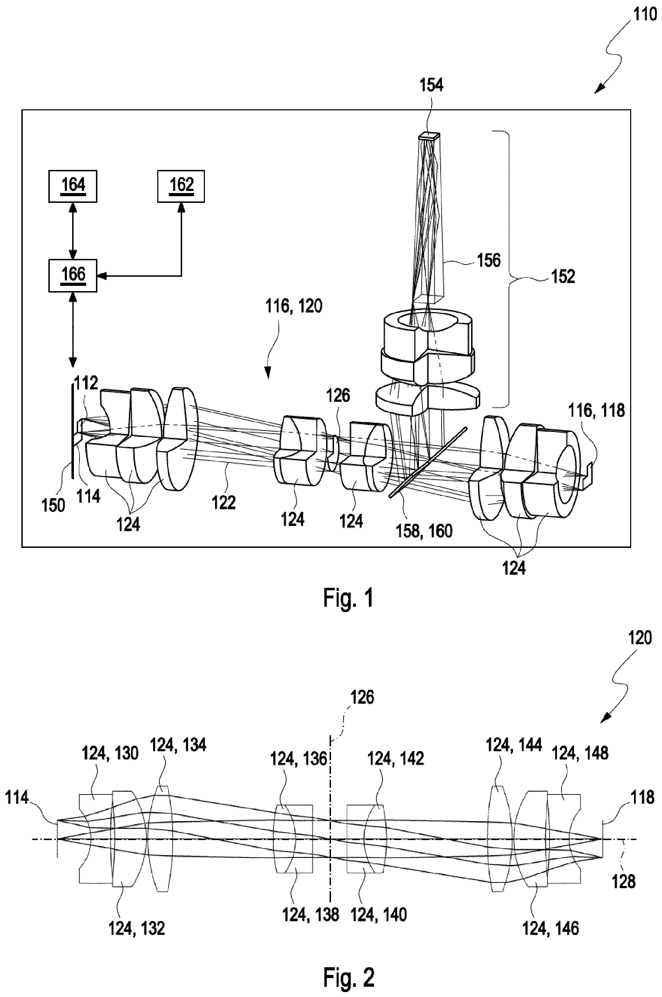

Figure 1 shows a schematic illustration of an instrument 110 for automatically dissecting a biological specimen 112 on a slide 114 according to an embodiment of the present invention. The instrument 110 comprises at least one imaging system 116. The imaging system 116 comprises at least one camera 118 configured for sequentially imaging at least one image of the slide 114 at a plurality of slide positions. The camera 118 is a pixelated camera. Particularly, the camera 118 is a charge-coupled device (CCD) image sensor. Alternatively or in addition, the camera 118 is a complimentary metal-oxide semiconductor (CMOS) image sensor. The imaging system 116 has an image scale of about 1:1.

The imaging system 116 comprises a relay lens system 120 having a fixed focal length. The relay lens system 120 is configured for relaying an impinging light beam 122 from the slide 114 to the camera 118.

Figure 2 shows a schematic illustration of the relay lens system 120. As shown in Figure 2, the relay lens system 120 comprises a plurality of lenses 124. The lenses 124 are arranged symmetrically or quasi-symmetrically with respect at least one plane of symmetry 126 perpendicular to an optical axis 128. The relay lens system 120 may constitute the optical axis 128. The plane perpendicular to the optical axis 128 may be the x,y-plane. The relay lens system 120 may constitute a coordinate system, wherein "z" is a coordinate along the optical axis 128, also denoted as z-axis or z-direction. A coordinate along the z-axis may be considered a longitudinal coordinate z. The directions transversal to the z-axis may be considered as x- and y-directions. The x- and y-directions span the x,y-plane. Particularly, the relay lens system 120 comprises ten lenses 124. In a direction of propagation of the light beam 122 from the slide 114 to the camera 118, the relay lens comprises a bi-concave lens, a meniscus lens, a bi-convex lens followed by a cemented doublet lens, followed by a mirrored symmetric arrangement of said lenses 124. With other words, the relay lens system 120 comprises a first bi-concave lens 130, a first meniscus lens 132, a first bi-convex lens 134, a first doublet comprising the elements 136 and 138, and the mirrored counterparts 140, 142, 144, 146 and 148 if seen in the direction of propagation of the light beam 122 from the slide 114 to the camera 118.

The first bi-concave lens 130, first meniscus lens 132, the first bi-convex lens 134, the first doublet comprising the elements 136 and 138 are arranged on the one side with respect to the plane of symmetry 126, wherein the second doublet comprising the elements 140 and 142, the second bi-convex lens 144, the second meniscus 146, the second bi-concave lens 148 are arranged on the other side with respect to the plane of symmetry 126. The plane of symmetry 126 may be regarded as mirror axis in a 2D section. The aperture stop may be located in the plane of symmetry 126.

As mentioned above, the relay lens system 120 has a fixed focal length. With other words, the focal length of the relay lens system 120 is fixed, in particular non-adjustable. The focal length of the relay lens system 120 may be defined by the selection and fixed position of the respective lenses 124 comprised by the relay lens system 120. The relay lens system 120 comprises a Numerical Aperture of NA= 0.05 to 0.5 such as 0.18. Further, the relay lens system 120 comprises a resolution of < 20 µm over the full field of view such as 4 µm. Thus, the relay lens system 120 is configured for extending a length of the optical system of the instrument 110. The relay lens system 120 may be configured for inverting the image. Exemplarily, two field points are shown (axis point and field edge).

As is further shown in Figure 1, the instrument 110 comprises a movable xy-stage 150 configured for setting the slide position. The xy-stage 150 is a motorized xy-stage 150. The xy-stage 150 is coupled to the slide 114 and is configured to move the slide 114 in a xy-plane. Particularly, the xy- stage is configured for controlling movement of the slide 114 transversal to the optical axis 128.

The instrument 110 further comprises at least one illuminator 152 configured for illuminating the slide 114. The illuminator 152 comprises at least one light source 154. The illuminator 152 may comprise at least one light source 154. Merely as an example, the illuminator 152 comprises at least one light emitting diode (LED) light source. The illuminator 152 may be configured for emitting light having a single wavelength, e.g. of 486 nm, 588 nm or 656 nm, or may be configured for simultaneously emitting light having different wavelength, e.g. of 486 nm, 588 nm and 656 nm. Such a LED light source 154 allows allow high peak illumination of the specimen 112.

The illuminator 152 further comprises a mixing rod 156. An entrance facet of the mixing rod 156 may be in close contact with the light source 154. Therefore, the spatial light distribution at the entrance facet is non-uniform to the same degree as the light source itself. The mixing rod 156 may be configured for guiding the light to the exit facet via multiple bounces at the side walls based on total internal reflexion. The light distribution at the exit facet is spatially uniform then and forms a secondary light source.

The instrument 110 further comprises at least one transfer element 158 configured for guiding a light beam 122 from the illuminator 152 to the slide 114 and for transmitting light from the relay lens system 120 to the camera 118. The transfer element 158 may be or may comprise at least one beam splitter 160.

The instrument 110 further comprises at least one processing unit 162 configured for generating a full slide image by stitching the sequentially imaged images of the slide 114. It has to be noted that the field of view of a 1:1 relay lens system 120 may be definitely smaller than a full slide 114. For example, the field of view may be Ø 11 mm. Optical acquisition of a full slide 114 may be achieved by stitching individual imaging frames, which are recorded sequentially.

The instrument 110 further comprises a milling machine 164 for mechanical dissection. Dissecting relates to a process of extracting at least one specific area of interest of the biological specimen 112 mounted on the slide 114. Extracting may comprise one or more of cutting, disrupting, milling and the like. Several techniques for dissecting are known by the skilled person. For example, the dissecting may comprise ablating such as by scraping the biological specimen 112, e.g. by using at least one cutting device such as a scalpel, also denoted as macrodissection, and/or by using laser-based instruments, also denoted as Laser Capture Microdissection (LCM). For example, the dissecting may comprise mesodissection. The mesodissection may be performed as described in US 2014/0329269, WO2016120433 A1, or US 10,876,933 B2. The instrument 110 may comprise at least one milling machine 164. The milling machine 164 may comprise at least one extractor, such as a cutting tip, configured for extracting configured for extracting the at least one specific area of interest of the biological specimen 112 mounted of the slide 114. The milling machine 164 may comprise further elements such as at least one liquid dispensing port configured for dispensing liquid to the slide 114 and/or at least one liquid aspiration port configured for aspirating liquid to the slide 114 at a sample facing side of the extraction device. The instrument 110 further comprises at least one control unit 166 configured for controlling the milling machine 164 based on the full slide image. Movement of the xy-stage 150 is also controlled by the control unit 166. The processing unit 162 is functionally coupled to the control unit 166. The processing unit 162 is configured for identifying the specific area of interest of the biological specimen 112 to be extracted.

The instrument 110 may be used to perform a method for automatically dissecting a biological specimen 112 on a slide 114. The method may be computer implemented. For this purpose, the instrument 110 may comprise a computer and may be linked to a computer, respectively.

First, a plurality of slide positions using the movable xy-stage 150 is set. For example, a first slide 114 position may be at (X1,Y1) and a next slide 114 position may be (X2, Y2). The first slide 114 position and the next slide 114 position may be neighboring lateral x,y-positions. Then, at each slide 114 position, an impinging light beam 122 is relayed from the slide 114 to the camera 118 by using the relay lens system 120 having the fixed focal length and sequentially imaging at least one image of the slide 114 at a plurality of slide 114 position by using the at least one camera 118 of the at least one imaging system 116. Finally, the sequentially imaged images of the slide 114 are stitched thereby generating a full slide 114 image by using the processing unit 162.

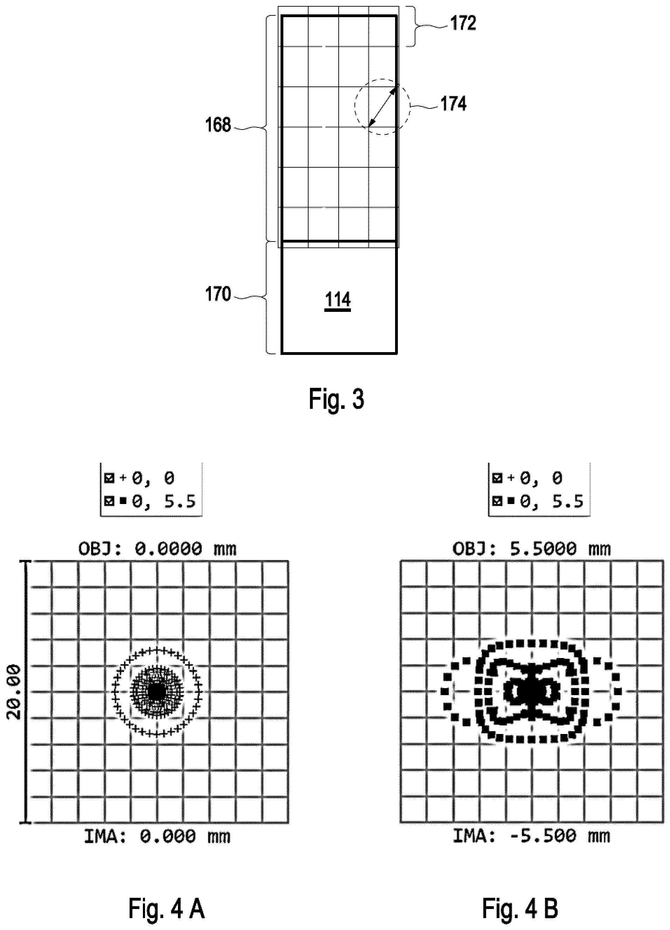

Figure 3 shows a top view of an exemplary slide 114. Figure 3 explains the stitching of the sequentially imaged images in further detail. As shown in Figure 3, the slide 114 includes a sample section 168 for supporting the specimen 112 and a labelling section 170. Merely as an example, the sample section 168 includes an area of 25 x 50 mm² and the labelling section 170 includes an area of 25 x 25 mm². The field of view 172 of the camera 118 may be 6.6 x 8.8 mm². The field of view 174 of a 1:1 relay lens system 120 may be definitely smaller than a full slide 114. For example, the field of view 174 of the relay lens system 120 may be Ø 11mm. As shown in Figure 3, just as a zoom concept, stitching requires the acquisition of multiple image frames for covering a full slide 114. For example, assuming an image scale of 1, 4x6 = 24 images are sufficient for a 2/3' camera 118. Pixel sizes in object and image space are the same. In this case a Sony Pregius^{®} CMOS sensor with a standard pixel size of 3.45µm of can be used which fulfills the 4 µm sampling requirement. For example, 24 imaging frames can be integrated into a virtual slide 114 comprising about 117 Mega Pixel.

In order to explain the optical performance of the instrument 110 and the relay lens system 120, respectively, in further detail, some illustrative examples are given hereinafter.

Figures 4A to 4B show spot diagrams with different positions at the object (OBJ) surface for the axis point with a field height of 0mm and for the field edge with a field height of 5.5mm at a surface image IMA as indicated by the legend in the Figures 4A to 4B. As can be taken from Figures 4A to 4B, the root mean square spot radius matches the Airy radius of 2 µm over the full field of view. This indicates diffraction limited performance. Further, there is no significant drop of optical performance at the edge of the image.

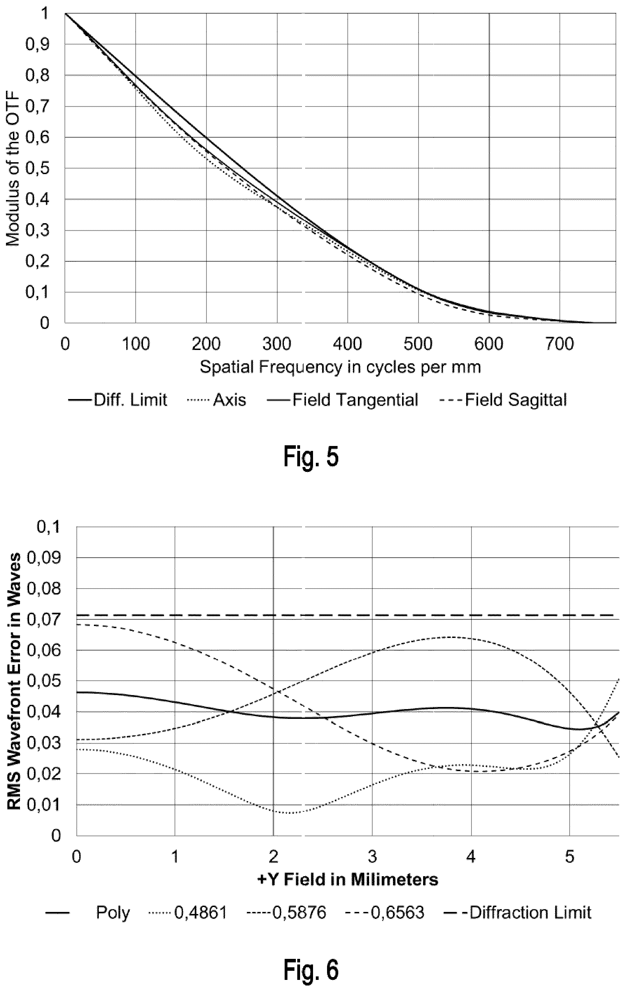

Figure 5 shows a contrast transfer function indicating a polychromatic diffraction Modulation Transfer Function (MTF). The x-axis indicates a spatial frequency in cycles per mm. The y-axis indicates the modulus of the optical transfer function (OTF). The graphs refer to different field positions as indicated by the legend in the Figure 5. As can be taken from Figure 5, the contrast transfer function is close to the theoretical limit resulting from diffraction.

Figure 6 shows the root mean square error of the wavefront. The x-axis indicates a +Y field in mm. The y-axis indicates the root mean square wavefront error in waves. The graphs refer to different wavelengths of polychromatic light, 486 nm, 587 nm and 656 nm and diffraction limit as indicated by the legend in the Figure 6. The root mean square wavefront error is the most accepted criterion for the optical performance of an imaging lens. The diffraction limit is defined as 1/14 waves. As can be taken from Figure 6, the proposed design fulfils the diffraction limit for all field points and all wavelengths.

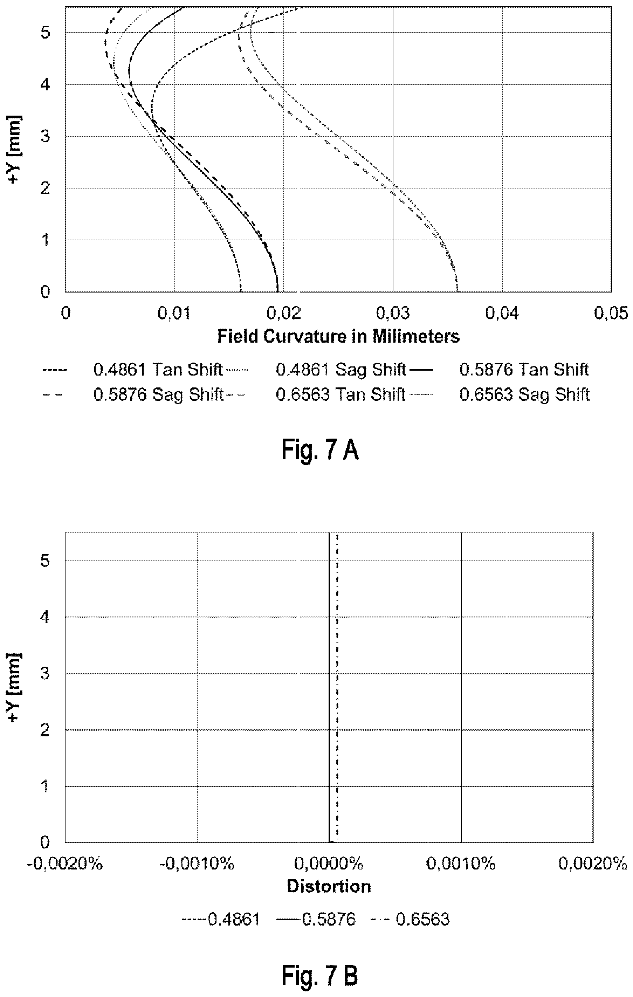

Figure 7A shows a field curvature and Figure 7B a field distortion. The field curvature plot shows the distance from the image surface to the paraxial image surface (x-axis) as a function of field coordinate (y-axis). The tangential data are the distances measured along the Z-axis from the image surface to the paraxial image surface measured in the tangential (YZ) plane. The sagittal data are the distances measured in the plane orthogonal to the tangential plane. The graphs refer to different wavelengths of 486 nm, 587 nm and 656 nm as indicated by the legend in the Figure 7A. In Figure 7B, the x-axis indicates the distortion in percent and the y-axis indicates the +Y position. The graphs refer to different wavelengths of 486 nm, 587 nm and 656 nm as indicated by the legend in the Figure 7B. As can be taken from Figures 7A and 7B, the image is flat to about 16 µm. The image distortion is exactly zero. The absence of any distortion massively supports the proposed stitching concept. No rectification procedure needs to be implemented for achieving a seamless stitching result. The individual tiles (frames) are matching inherently.

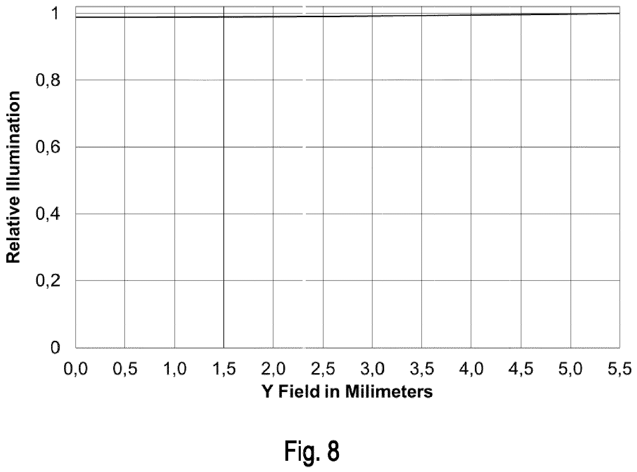

Figure 8 shows a vignetting and spatial uniformity. The x-axis indicates a +Y field in mm. The y-axis indicates a relative illumination. The graph refers to a relative illumination at a wavelength of 587 nm. As can be taken from Figure 8, there is no vignetting. Similar to the distortion topic, the excellent spatial uniformity supports the stitching approach. The raw images do not need any field flattening operations for achieving a seamless tiling.

### List of reference numbers

- 110: instrument
- 112: specimen
- 114: slide
- 116: imaging system
- 118: camera
- 120: relay lens system
- 122: light beam
- 124: lens
- 126: plane of symmetry
- 128: optical axis
- 130: bi-concave lens
- 132: meniscus lens
- 134: bi-convex lens
- 136: element of doublet lens
- 138: element of doublet lens
- 140: mirrored counterpart
- 142: mirrored counterpart
- 144: mirrored counterpart
- 146: mirrored counterpart
- 148: mirrored counterpart
- 150: xy-stage
- 152: illuminator
- 154: light source
- 156: mixing rod
- 158: transfer element
- 160: beam splitter
- 162: processing unit
- 164: milling machine
- 166: control unit
- 168: sample section
- 170: labelling section
- 172: field of view of camera
- 174: field of view of relay lens system

## Claims

1. Instrument (110) for automatically dissecting a biological specimen (112) on a slide (114), wherein the instrument (110) comprises at least one imaging system (116), wherein the imaging system (116) comprises at least one camera (118) configured for sequentially imaging at least one image of the slide (114) at a plurality of slide positions,
wherein the imaging system (116) comprises a relay lens system (120) having a fixed focal length, wherein the relay lens system (120) is configured for relaying an impinging light beam (122) from the slide (114) to the camera (118),
wherein the instrument (110) comprises a movable xy-stage (150) configured for setting the slide (114) position,
wherein the instrument (110) comprises at least one processing unit (162) configured for generating a full slide (114) image by stitching the sequentially imaged images of the slide (114), **characterized in that**
the instrument (110) comprises a milling machine (164) for mechanical dissection, wherein the instrument (110) comprises at least one control unit (166) configured for controlling the milling machine (164) based on the full slide (114) image.

2. The instrument (110) according to the preceding claim, wherein the relay lens system (120) comprises a plurality of lenses (124), wherein the lenses (124) are arranged symmetrically or quasi-symmetrically with respect at least one plane of symmetry (126) perpendicular to an optical axis (128).

3. The instrument (110) according to the preceding claim, wherein the relay lens system (120) comprises ten lenses (124), wherein in direction of propagation of the light beam (122) from the slide (114) to the camera (118) the relay lens comprises a bi-concave lens (130), a meniscus lens (132), a bi-convex lens (134), and a doublet lens comprising elements (136) and (138), followed by a mirrored symmetric arrangement of said lenses (124).

4. The instrument (110) according to any one of the preceding claims, wherein the imaging system (116) has an image scale of about 1:1.

5. The instrument (110) according to any one of the preceding claims, wherein the relay lens system (120) comprises a Numerical Aperture of NA= 0.05 to 0.5.

6. The instrument (110) according to any one of the preceding claims, wherein the relay lens system (120) comprises a resolution of < 20 µm over the full field of view.

7. The instrument (110) according to any one of the preceding claims, wherein the camera (118) is a pixelated camera, wherein the camera (118) is a charge-coupled device (CCD) and/or a complimentary metal-oxide semiconductor (CMOS) image sensor.

8. The instrument (110) according to any one of the preceding claims, wherein the instrument (110) comprises at least one illuminator (152) configured for illuminating the slide (114), wherein the illuminator (152) comprises at least one light source (154).

9. The instrument (110) according to any one of the preceding claims, wherein the instrument (110) comprises at least one transfer element (158) configured for guiding a light beam from the illuminator (152) to the slide (114) and for transmitting light from the relay lens system (120) to the camera (118).

10. A method for automatically dissecting a biological specimen (112) on a slide (114) using an instrument (110) for automatically dissecting a biological specimen (112) on a slide (114) according to any one of the preceding claims, wherein the method comprises the following steps:
a) setting a plurality of slide positions using the movable xy-stage (150);
b) at each slide (114) position, relaying an impinging light beam (122) from the slide (114) to the camera (118) by using the relay lens system (120) having a fixed focal length and sequentially imaging at least one image of the slide (114) at a plurality of slide (114) position by using the at least one camera (118) of the at least one imaging system (116);
c) stitching the sequentially imaged images of the slide (114) thereby generating a full slide (114) image by using the processing unit (162),
**characterized in that** the instrument (110) comprises a milling machine (164) configured for mechanical dissection, wherein the method comprises controlling the milling machine (164) based on the full slide image by using a control device of the instrument (110).

11. The method according to the preceding claim, wherein the method is computer-implemented.

12. A computer program comprising instructions which, when the program is executed by the instrument (110) according to any one of the preceding claims referring to an instrument (110), cause the instrument (110) to perform the method according to any one of the preceding claims referring to a method.

13. A computer-readable storage medium comprising instructions which, when the program is executed by the instrument (110) according to any one of the preceding claims referring to an instrument (110), cause the instrument (110) to perform the method according to any one of the preceding claims referring to a method.

## Patentansprüche

1. Instrument (110) zum automatischen Präparieren einer biologischen Probe (112) auf einem Objektträger (114), wobei das Instrument (110) mindestens ein Bildgebungssystem (116) umfasst, wobei das Bildgebungssystem (116) mindestens eine Kamera (118) umfasst, die zum sequenziellen Abbilden mindestens eines Bildes des Objektträgers (114) an einer Vielzahl von Objektträgerpositionen konfiguriert ist,
wobei das Bildgebungssystem (116) ein Relaislinsensystem (120) mit einer festen Brennweite umfasst, wobei das Relaislinsensystem (120) zum Weiterleiten eines auftreffenden Lichtstrahls (122) von dem Objektträger (114) zu der Kamera (118) konfiguriert ist,
wobei das Instrument (110) einen beweglichen xy-Tisch (150) umfasst, der zum Einstellen der Position des Objektträgers (114) konfiguriert ist,
wobei das Instrument (110) mindestens eine Verarbeitungseinheit (162) umfasst, die zum Erzeugen eines vollständigen Bildes des Objektträgers (114) durch Zusammenfügen der sequenziell abgebildeten Bilder des Objektträgers (114) konfiguriert ist, **dadurch gekennzeichnet, dass**
das Instrument (110) eine Fräsmaschine (164) zum mechanischen Präparieren umfasst, wobei das Instrument (110) mindestens eine Steuereinheit (166) umfasst, die zum Steuern der Fräsmaschine (164) basierend auf dem vollständigen Bild des Objektträgers (114) konfiguriert ist.

2. Instrument (110) nach dem vorhergehenden Anspruch, wobei das Relaislinsensystem (120) eine Vielzahl von Linsen (124) umfasst, wobei die Linsen (124) symmetrisch oder quasisymmetrisch in Bezug auf mindestens eine Symmetrieebene (126) senkrecht zu einer optischen Achse (128) angeordnet sind.

3. Instrument (110) nach dem vorhergehenden Anspruch, wobei das Relaislinsensystem (120) zehn Linsen (124) umfasst, wobei die Relaislinse in Ausbreitungsrichtung des Lichtstrahls (122) von dem Objektträger (114) zu der Kamera (118) eine bikonkave Linse (130), eine Meniskuslinse (132), eine bikonvexe Linse (134) und eine Doppellinse, umfassend Elemente (136) und (138), gefolgt von einer spiegelsymmetrischen Anordnung der Linsen (124) umfasst.

4. Instrument (110) nach einem der vorhergehenden Ansprüche, wobei das Abbildungssystem (116) eine Bildskala von etwa 1:1 aufweist.

5. Instrument (110) nach einem der vorhergehenden Ansprüche, wobei das Relaislinsensystem (120) eine numerische Apertur von NA = 0,05 bis 0,5 umfasst.

6. Instrument (110) nach einem der vorhergehenden Ansprüche, wobei das Relaislinsensystem (120) eine Auflösung von < 20 µm über das vollständige Sichtfeld umfasst.

7. Instrument (110) nach einem der vorhergehenden Ansprüche, wobei die Kamera (118) eine Pixelkamera ist, wobei die Kamera (118) ein CCD-(Charge-Coupled Device)-und/oder ein CMOS-(Complementary Metal-Oxide Semiconductor)-Bildsensor ist.

8. Instrument (110) nach einem der vorhergehenden Ansprüche, wobei das Instrument (110) mindestens eine Beleuchtungseinrichtung (152) umfasst, die zum Beleuchten des Objektträgers (114) konfiguriert ist, wobei die Beleuchtungseinrichtung (152) mindestens eine Lichtquelle (154) umfasst.

9. Instrument (110) nach einem der vorhergehenden Ansprüche, wobei das Instrument (110) mindestens ein Übertragungselement (158) umfasst, das zum Leiten eines Lichtstrahls von der Beleuchtungseinrichtung (152) zu dem Objektträger (114) und zum Übertragen von Licht von dem Relaislinsensystem (120) zu der Kamera (118) konfiguriert ist.

10. Verfahren zum automatischen Präparieren einer biologischen Probe (112) auf einem Objektträger (114) unter Verwendung eines Instruments (110) zum automatischen Präparieren einer biologischen Probe (112) auf einem Objektträger (114) nach einem der vorhergehenden Ansprüche, wobei das Verfahren die folgenden Schritte umfasst:
a) Einstellen einer Vielzahl von Objektträgerpositionen unter Verwendung des beweglichen xy-Tischs (150);
b) an jeder Position des Objektträgers (114), Weiterleiten eines auftreffenden Lichtstrahls (122) von dem Objektträger (114) zu der Kamera (118) unter Verwendung des Relaislinsensystems (120) mit einer festen Brennweite und sequenzielles Abbilden mindestens eines Bildes des Objektträgers (114) an einer Vielzahl von Positionen des Objektträgers (114) unter Verwendung der mindestens einen Kamera (118) des mindestens einen Bildgebungssystems (116);
c) Zusammenfügen der sequenziell abgebildeten Bilder des Objektträgers (114), wodurch ein vollständiges Bild des Objektträgers (114) unter Verwendung der Verarbeitungseinheit (162) erzeugt wird,
**dadurch gekennzeichnet, dass** das Instrument (110) eine Fräsmaschine (164) umfasst, die zum mechanischen Präparieren konfiguriert ist, wobei das Verfahren das Steuern der Fräsmaschine (164) basierend auf dem vollständigen Bild des Objektträgers unter Verwendung einer Steuervorrichtung des Instruments (110) umfasst.

11. Verfahren nach dem vorhergehenden Anspruch, wobei das Verfahren computerimplementiert ist.

12. Computerprogramm, umfassend Anweisungen, die das Instrument (110) veranlassen, das Verfahren nach einem der vorhergehenden Ansprüche, die ein Verfahren betreffen, durchzuführen, wenn das Programm von dem Instrument (110) nach einem der vorhergehenden Ansprüche, die ein Instrument (110) betreffen, ausgeführt wird.

13. Computerlesbares Speichermedium, umfassend Anweisungen, die das Instrument (110) veranlassen, das Verfahren nach einem der vorhergehenden Ansprüche, die ein Verfahren betreffen, durchzuführen, wenn das Programm von dem Instrument (110) nach einem der vorhergehenden Ansprüche, die ein Instrument (110) betreffen, ausgeführt wird.

## Revendications

1. Instrument (110) de dissection automatique d'un échantillon biologique (112) sur une lame (114), dans lequel l'instrument (110) comprend au moins un système d'imagerie (116), dans lequel le système d'imagerie (116) comprend au moins une caméra (118) configurée pour capturer séquentiellement au moins une image de la lame (114) au niveau d'une pluralité de positions de lame,
dans lequel le système d'imagerie (116) comprend un système de lentilles relais (120) ayant une distance focale fixe, dans lequel le système de lentilles relais (120) est configuré pour relayer un faisceau lumineux (122) incident de la lame (114) à la caméra (118),
dans lequel l'instrument (110) comprend une platine xy mobile (150) configurée pour régler la position de la lame (114),
dans lequel l'instrument (110) comprend au moins une unité de traitement (162) configurée pour générer une image de la lame (114) complète en assemblant les images capturées séquentiellement de la lame (114), **caractérisé en ce que**
l'instrument (110) comprend une fraiseuse (164) pour dissection mécanique, dans lequel l'instrument (110) comprend au moins une unité de commande (166) configurée pour commander la fraiseuse (164) en se basant sur l'image de la lame (114) complète.

2. Instrument (110) selon la revendication précédente, dans lequel le système de lentilles relais (120) comprend une pluralité de lentilles (124), dans lequel les lentilles (124) sont agencées de manière symétrique ou quasi-symétrique par rapport à au moins un plan de symétrie (126) perpendiculaire à un axe optique (128).

3. Instrument (110) selon la revendication précédente, dans lequel le système de lentilles relais (120) comprend dix lentilles (124), dans lequel dans la direction de propagation du faisceau lumineux (122) de la lame (114) vers la caméra (118) la lentille relais comprend une lentille biconcave (130), une lentille ménisque (132), une lentille biconvexe (134) et une lentille doublet comprenant les éléments (136) et (138), suivies d'un agencement symétrique en miroir desdites lentilles (124).

4. Instrument (110) selon l'une quelconque des revendications précédentes, dans lequel le système d'imagerie (116) a une échelle d'image d'environ 1:1.

5. Instrument (110) selon l'une quelconque des revendications précédentes, dans lequel le système de lentilles relais (120) comprend une ouverture numérique ON = 0,05 à 0,5.

6. Instrument (110) selon l'une quelconque des revendications précédentes, dans lequel le système de lentilles relais (120) comprend une résolution < 20 µm sur le champ de vision complet.

7. Instrument (110) selon l'une quelconque des revendications précédentes, dans lequel la caméra (118) est une caméra pixelisée, dans lequel la caméra (118) est un capteur d'image de type dispositif à transfert de charge (CCD) et/ou semi-conducteur à oxyde de métal complémentaire (CMOS).

8. Instrument (110) selon l'une quelconque des revendications précédentes, dans lequel l'instrument (110) comprend au moins un dispositif d'éclairage (152) configuré pour éclairer la lame (114), dans lequel le dispositif d'éclairage (152) comprend au moins une source lumineuse (154).

9. Instrument (110) selon l'une quelconque des revendications précédentes, dans lequel l'instrument (110) comprend au moins un élément de transfert (158) configuré pour guider un faisceau lumineux provenant du dispositif d'éclairage (152) vers la lame (114) et pour transmettre de la lumière du système de lentilles relais (120) vers la caméra (118).

10. Procédé de dissection automatique d'un échantillon biologique (112) sur une lame (114) en utilisant un instrument (110) de dissection automatique d'un échantillon biologique (112) sur une lame (114) selon l'une quelconque des revendications précédentes, dans lequel le procédé comprend les étapes suivantes :
a) réglage d'une pluralité de positions de lame en utilisant la platine xy mobile (150) ;
b) au niveau de chaque position de lame (114), relais d'un faisceau lumineux (122) incident de la lame (114) vers la caméra (118) en utilisant le système de lentilles relais (120) ayant une distance focale fixe et capture séquentielle d'au moins une image de la lame (114) au niveau d'une pluralité de positions de lame (114) en utilisant l'au moins une caméra (118) de l'au moins un système d'imagerie (116) ;
c) assemblage des images capturées séquentiellement de la lame (114) générant ainsi une image de la lame (114) complète en utilisant l'unité de traitement (162),
**caractérisé en ce que** l'instrument (110) comprend une fraiseuse (164) configurée pour la dissection mécanique, dans lequel le procédé comprend la commande de la fraiseuse (164) en se basant sur l'image de la lame complète en utilisant un dispositif de commande de l'instrument (110).

11. Procédé selon la revendication précédente, dans lequel le procédé est mis en œuvre par ordinateur.

12. Programme informatique comprenant des instructions qui, lorsque le programme est exécuté par l'instrument (110) selon l'une quelconque des revendications précédentes se référant à un instrument (110), amènent l'instrument (110) à réaliser le procédé selon l'une quelconque des revendications précédentes se référant à un procédé.

13. Support de stockage lisible par ordinateur comprenant des instructions qui, lorsque le programme est exécuté par l'instrument (110) selon l'une quelconque des revendications précédentes se référant à un instrument (110), amènent l'instrument (110) à réaliser le procédé selon l'une quelconque des revendications précédentes se référant à un procédé.
